# EUROPÄISCHE PATENTANMELDUNG

(11) **EP 0 789 204 A2**
(43) Veröffentlichungstag der Anmeldung: **13.08.1997**
(21) Anmeldenummer: 96113525.8
(22) Anmeldetag: 23.08.1996
(51) Int. Cl.: F24J 2/46

(54) **Thermischer Sonnenkollektor mit Volumenausgleichsbehälter**

(30) Priorität: 07.09.1995 DE 19532995
(71) Anmelder: MESSER GRIESHEIM GMBH, D-60547 Frankfurt (DE)
(72) Erfinder: Gerling, Helmut, 47447 Moers (DE); Hanisch, Michael, Dr., 68219 Mannheim (DE); Horn, Holger, 65388 Schlangenbad (DE); Kappesser, Artur, 55218 Ingelheim (DE)

(57) **Zusammenfassung**

Die Erfindung betrifft einen thermischen Sonnenkollektor, welcher zu Wärmeisolationszwecken mit Füllgasen niedrigerer spezifischer Wärmeleitfähigkeit als Luft befüllt ist und an dem ein diffusiondichter Volumenausgleichsbehälter (7) zur Aufnahme des Füllgases angebracht ist.

## Beschreibung

Die Erfindung betrifft einen thermischen Sonnenkollektor nach dem Oberbegriff des Anspruchs 1.

Aus der DE 42 32 003 A1 ist ein thermischer Sonnenkollektor bekannt, dessen Innenraum zur Verhinderung von Korrosion mit einem Schutzgas befüllt ist, welches bei Erhitzung in einen Ausgleichsbehälter entweichen kann. Hierbei wird es über ein Trockenmittel geleitet.

In der DE 41 41 195 C2 ist ein Sonnenkollektor beschrieben, welcher mit Füllgasen beschickt ist, die eine geringere Wärmeleitfähigkeit als Luft aufweisen. Um eine wärmebedingte Ausdehnung des Füllgases und den damit verbundenen Druckausgleich zu kompensieren, wird vorgeschlagen, an den Innenraum des Sonnenkollektors einen expansionsfähigen Körper aus Gummi als Ausgleichsbehälter anzubringen, der sein Volumen ändert, um das expandierende Gas aufzunehmen.

Bei der Befüllung mit wertvollen Füllgasen, welche der thermischen Dämmung des Kollektors dienen, kommen jedoch Füllgasverluste durch Undichtigkeiten, insbesondere des Ausgleichsbehälters vor. Der Verlust von teurem Füllgas führt zur Verringerung des Wirkungsgrades der thermischen Sonnenkollektoren. Fehlt ein Ausgleichsbehälter, so muß der Innenraum des Sonnenkollektors zur thermischen Dämmung entweder ein Vakuum aufweisen, wie dies beispielsweise bei den Röhrenkollektoren der Fall ist, andernfalls besteht bei den Flachkollektoren die Gefahr, daß der Kollektor implodiert, sofern er mit einer Gasfüllung beschickt ist und der Kollektor keinen Druckausgleich gestattet.

Der Erfindung liegt daher die Aufgabe zugrunde, einen thermischen Sonnenkollektor zu schaffen, der unter Nutzung der thermischen Dämmungseigenschaften von hochwertigen Füllgasen einen hohen Wirkungsgrad aufweist, ohne daß eine Explosions- oder Implosionsgefahr besteht. Füllgasverluste sollen dabei verhindert werden.

Ausgehend von in dem im Oberbegriff des Anspruchs 1 berücksichtigten Stand der Technik ist die Aufgabe erfindungsgemäß dadurch gelöst, daß der Volumenausgleichsbehälter diffusionsdicht ist. Unter dem Begriff "diffusionsdicht" ist hier zu verstehen, daß die durch eine bestimmte Gasfüllung erreichbare Erhöhung der Wärmedämmung gegenüber Luft innerhalb der zu erwartenden Nutzungsdauer nicht durch einen Gasverlust durch Diffusion verlorengeht. Diese Definition ergibt sich in Anlehnung an die DIN 1286 Teil 2, worin die Prüfung von Mehrscheiben-Isolierglas mit einer Gasfüllung beschrieben ist.

Mit dem erfindungsgemäßen thermischen Sonnenkollektor ist es nunmehr möglich, durch die Beschickung des Kollektors mit Füllgasen geringerer Wärmeleitfähigkeit einen hohen Wirkungsgrad zu erzielen, ohne daß Füllgasverluste in Kauf genommen werden müssen. Durch die diffusionsdichte Ausführung des Volumenausgleichsbehälters werden Verluste an Füllgas relativ sicher vermieden, obwohl ein starker Konzentrationsunterschied zwischen dem verwendeten Füllgas und der umgebenden Luft mit den Hauptbestandteilen Stickstoff und Sauerstoff besteht.

Als Volumenausgleichsgefäß kann gemäß der Erfindung jede Vorrichtung verwendet werden, die den Anforderungen an Dichtigkeit gegenüber den Füllgasen gerecht wird. Vorzugsweise wird ein diffusionsdichter Ballon eingesetzt. Unter dem Begriff "Ballon'' sind hier Behälter zu verstehen, die in der Lage sind, ein bestimmtes Volumen aufzunehmen. Dies können beispielsweise schlauchartige, gefaltete Hohlkörper sein, welche sich bei einer Volumenvergrößerung des Füllgases entfalten können.

Als Werkstoffe für den Ballon können zum Beispiel Metalle oder mehrlagige Materialien mit mindestens einer Metallschicht, beispielsweise metallbeschichtete Kunststoffe oder Kunststoffe in Kombination mit Metallen in Betracht, wobei diese Materialien insbesondere in Form von Folien verwendet werden. Gemäß der Erfindung besteht der diffusionsdichte Ballon vorzugsweise aus einem Kunststoffmaterial, welches mit mindestens einer Metallschicht versehen ist. Dies hat den Vorteil, daß das Ballonmaterial durch die Metallschicht diffusionsdicht ist und gleichzeitig eine gewisse Elastizität aufweist, wodurch eine relativ lange Lebensdauer gewährleistet ist. Als Kunststoffmaterial kann beispielsweise aluminiumbeschichtetes Polyethylen (PE) oder Polytetrafluorethylen (PTFE) eingesetzt werden. Auch eine Mehrfachbeschichtung mit verschiedenen Metallen ist vorgesehen. Es hat sich als günstig erwiesen, wenn mindestens zwei Lagen Kunststoff und Metall alternierend übereinander angeordnet sind, so daß eventuellen Beschädigungen vorgebeugt werden kann. Das diffusionsdichte Verschließen des Hohlkörpers aus einer Kunststoffolie wird durch Verkleben und/oder Verschweißen durchgeführt, was in vorteilhafter Weise über die metallischen Oberflächen der Metallschicht bzw. Metallfolie erfolgt. Eine derartige diffusiondichte Verbindung kann beispielsweise durch einen Butylkleber mit einer Verpressung erfolgen.

Der diffusionsdichte Volumenausgleichsbehälters ist erfindungsgemäß mit einer Klebe- bzw. Verschweißungs- und Fügetechnik angebracht, welche ein Austreten von Füllgas aus dem thermischen Sonnenkollektor durch Diffusion verhindert, in dem die metallischen Oberflächen verklebt und/oder verschweißt werden. Eine solche diffusiondichte Verbindung kann vorzugsweise durch einen Butylkleber mit einer Verpressung sichergestellt werden. Es können jedoch auch andere Kleber wie Sulfidkleber zur Anwendung kommen. Vorzugsweise ist der Ballon über einen Stutzen mit dem Gehäuse des Kollektors verbunden. Dann ist es vorteilhaft, daß auch die Schweißnähte, durch welche der Ballon an den Stutzen angebracht ist, mit einem derartigen Kleber zusätzlich verklebt werden, wobei die Verklebung und/oder Verschweißung über metallische Oberflächen erfolgt.

Ferner ist es nach der Erfindung vorgesehen, daß die Deckplatte aus Glas an dem Gehäuse des Sonnenkollektors durch eine diffusionsdichte Verklebung angebracht ist. Als Kleber kann zum Beispiel ein Butylkleber verwendet werden, der eine ausreichende Diffusionsdichtigkeit gewährleistet.

Erfindungsgemäß ist der diffusionsdichte Volumenausgleichsbehälter derart ausgebildet, daß bei maximaler Volumenvergrößerung des Füllgases kein Überdruck entsteht.

In einer günstigen Ausführungsform ist der diffusionsdichte Volumenausgleichsbehälter in das Gehäuse des thermischen Sonnenkollektors integriert.

Als Füllgase kommen vorzugsweise Krypton, Xenon, Argon und Kohlendioxid oder deren Gemische in Betracht, welche einen kleineren Wärmeleitfähigkeitskoeffizienten als Luft aufweisen.

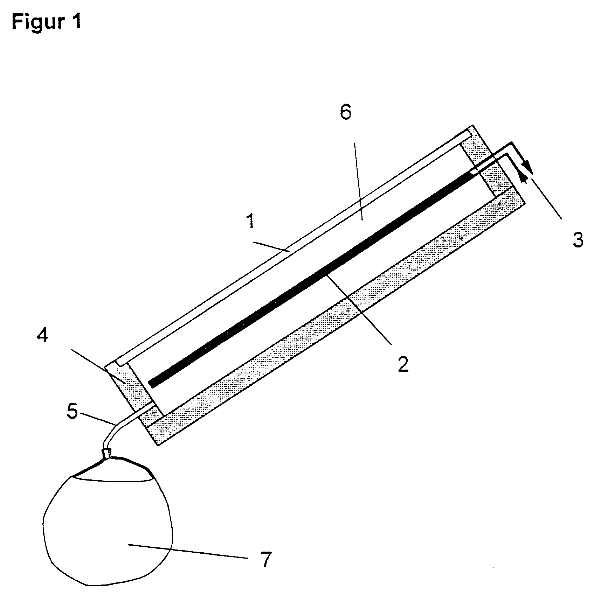

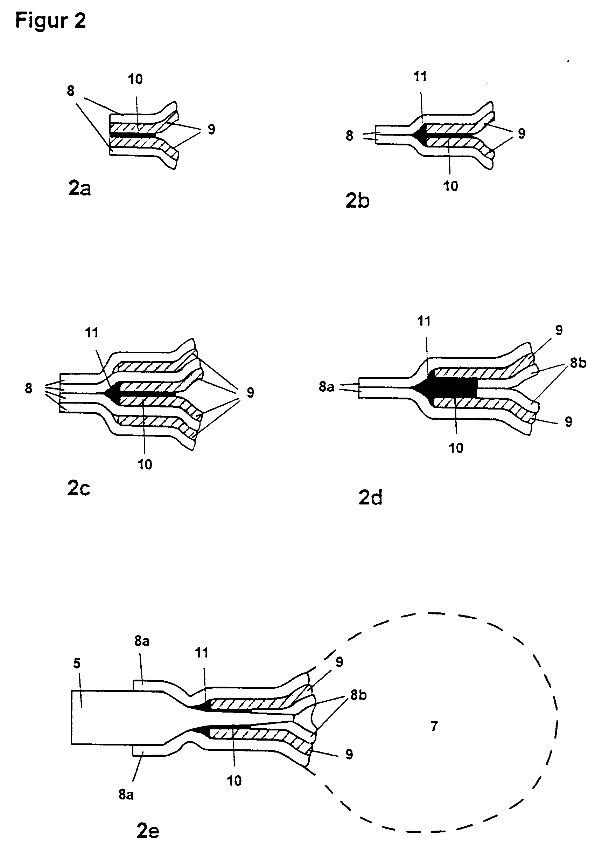

Der erfindungsgemäße thermische Sonnenkollektor ist anhand von Abbildungen (Figur 1 und Figur 2) beispielhaft dargestellt.

Figur 1 zeigt einen diffusionsdichten, thermischen Sonnenkollektor im Querschnitt.

In Figur 2 sind in den Abbildungen 2a, 2b, 2c und 2d Möglichkeiten eines diffusionsdichten Verschließens eines Ballons und in Abbildung 2e dessen diffusionsdichte Verbindung an einem Stutzen dargestellt.

In Figur 1 ist ein thermischer Sonnenkollektor dargestellt, dem eine Deckplatte (1) aus Glas, ein Absorber (2) und ein Leitungssystem (3) zugeordnet ist, welches eine Flüssigkeit zur Aufnahme der von dem Absorber (2) absorbierten Wärme zum Energieverbraucher im Kreislauf führt. An dem Gehäuse (4) des thermischen Sonnenkollektors ist ein Stutzen (5) angebracht, der den Innenraum (6) des Kollektors mit einem Ballon (7) verbindet. Der Innenraum (6) des thermischen Sonnenkollektors ist mit einem Gas einer geringeren Wärmeleitfähigjkeit als Luft befüllt. Der Ballon (7) ist diffusionsdicht ausgebildet und durch einen Butylkleber mit einer Verpressung an den Stutzen (5) angebracht, wodurch ein Austreten von Füllgas am Stutzen (5) durch Diffusion verhindert wird. Die Schweißnähte, durch welche der Ballon (7) an den Stutzen (5) angebracht ist, sind mit einem Butylkleber zusätzlich verklebt. Als Materialien für den Ballon (7) wurde aluminiumbeschichtetes Polyethylen (PE) oder Polytetrafluorethylen (PTFE) verwendet.

In Figur 2 in den Abbildungen 2a, 2b, 2c und 2d sind verschiedene Möglichkeiten des diffusionsdichten Verschließens eines Ballons (7) dargestellt. In der Abbildung 2a und 2b sind metallbeschichtete Kunststoffolien (8) über die Metallschichten (9) durch einen diffusionsdichten Kleber (10) verklebt. Die Klebeverbindung erstreckt sich in Abbildung 2a nur über die Fläche der Metallschichten (9). Der Kleber in Abbildung 2b ist zusätzlich in einer sackartigen Aushöhlung (11) angeordnet, welche dadurch gebildet wird, daß die Kunststoffolien (8) über die Metallschichten (9) hinausragen und daß die Kunststoffolien (8) an deren Ende durch Zusammenpresssen oder Verschweißen zusammengefügt sind. Eine analog der in Abbildung 2b gezeigten Verbindung ist in Abbildung 2c dargestellt für ein Ballonmaterial, welches aus zwei alternierenden Lagen von Kunststoffolien (8) und Metallschichten (9) besteht und wobei ausschließlich die Kunststoffolien (8) an deren Ende durch Zusammenpresssen oder Verschweißen zusammengefügt sind. In Abbildung 2d ist der Kleber in einer sackartigen Aushöhlung (11) angeordnet, die dadurch entsteht, daß äußere Kunststoffolien (8a) über Metallschichten (9) hinausragen und durch Zusammenpresssen oder Verschweißen zusammengefügt sind und daß die Metallschichten (9) über innen zusätzlich angeordnete Kunststoffolien (8b) hinausragen. Abbildung 2e der Figur 2 zeigt eine diffusionsdichte Verbindung zwischen Ballon (7) -hier schematisch durch eine gestrichelte Linie dargestellt- und Stutzen (5). Die Klebeverbindung ist analog zur Verbindung in Abbildung 2d aufgebaut, wobei der Stutzen (5) zwischen dem Ballonmaterial (8a, 8b, 9) angeordnet ist und mit seinem Ende in das Innere des Ballons (7) hineinragt.

## Patentansprüche

1. Thermischer Sonnenkollektor mit mindestens einem Absorber (2) und einer Deckplatte (1) aus Glas , welcher mit einem Füllgas geringerer thermischer Leitfähigkeit als Luft gefüllt ist und dessen mit Füllgas beschickter Innenraum (6) mit einem Volumenausgleichsbehälter in Verbindung steht,
dadurch gekennzeichnet,
daß der Volumenausgleichsbehälter diffusionsdicht ist.

2. Thermischer Sonnenkollektor nach Anspruch 1,
dadurch gekennzeichnet,
daß der diffusiondichte Volumenausgleichsbehälter ein Ballon (7) ist.

3. Thermischer Sonnenkollektor nach Anspruch 2,
dadurch gekennzeichnet,
daß der diffusiondichte Ballon (7) aus Kunststoff besteht, welcher mit mindestens einer Metallschicht beaufschlagt ist.

4. Thermischer Sonnenkollektor nach Anspruch 2 oder 3,
dadurch gekennzeichnet,
daß der diffusiondichte Ballon (7) mindestens aus zwei alternierenden Lagen aus Kunststoff und Metall besteht.

5. Thermischer Sonnenkollektor nach Anspruch 3 oder 4,
dadurch gekennzeichnet,
daß das diffusiondichte Verschließen des Ballons (7) durch Verkleben oder Verschweißen durchgeführt wird und über metallische Oberflächen erfolgt.

6. Thermischer Sonnenkollektor nach einem der Ansprüche 1 bis 5,
dadurch gekennzeichnet,
daß der diffusiondichte Volumenausgleichsbehälter über einen Stutzen (5) mit dem Innenraum (6) des thermischen Sonnenkollektors in Verbindung steht, an welchem er angeschweißt ist und daß die Schweißnaht zusätzlich mit einem Kleber abgedichtet ist, wobei die Verklebung und/oder Verschweißung über metallische Oberflächen erfolgt.

7. Thermischer Sonnenkollektor nach einem der Ansprüche 1 bis 6,
dadurch gekennzeichnet,
daß die Deckplatte (1) aus Glas an dem Gehäuse (4) durch eine diffusionsdichte Verklebung angebracht ist

8. Thermischer Sonnenkollektor nach einem der Ansprüche 1 bis 7,
dadurch gekennzeichnet,
daß der diffusiondichte Volumenausgleichsbehälter derart ausgebildet ist, daß bei maximaler Volumenvergrößerung des Füllgases kein Überdruck entsteht.

9. Thermischer Sonnenkollektor nach einem der Ansprüche 1 bis 8,
dadurch gekennzeichnet,
daß der diffusiondichte Volumenausgleichsbehälter in den thermischen Sonnenkollektor integriert ist.

10. Thermischer Sonnenkollektor nach einem der Ansprüche 1 bis 9,
dadurch gekennzeichnet,
daß das Füllgas mindestens eine Komponente aus einer Gruppe von Krypton, Xenon Argon und CO₂ enthält.
